# EUROPÄISCHE PATENTANMELDUNG

(11) **EP 4 620 913 A1**
(43) Veröffentlichungstag der Anmeldung: **24.09.2025**
(21) Anmeldenummer: 24020087.3
(22) Anmeldetag: 20.03.2024
(51) Int. Cl.: C01C 1/04

(54) **VERFAHREN ZUM BETRIEB EINER AMMONIAKSYNTHESE IN TEILLAST SOWIE TEILLASTFÄHIGE AMMONIAKSYNTHESE**

(71) Anmelder: Linde GmbH, 82049 Pullach (DE); Technische Universität München, 80333 München (DE)
(72) Erfinder: Reinke, Michael, 82049 Pullach (DE); Kender, Robert, 82049 Pullach (DE); Fahr, Steffen, 80290 München (DE); Klein, Harald, 80290 München (DE)
(74) Vertreter: Fischer, Werner

(57) **Zusammenfassung**

Die Erfindung betrifft ein Verfahren sowie eine Vorrichtung zur Synthese von Ammoniak (8), bei dem ein Wasserstoff und Stickstoff umfassendes Gasgemisch (1) mit zeitlich schwankendem Mengenstrom zur Bildung eines Ammoniaksynthesegases (3) bereitgestellt wird, das nach einem Verdichtungsschritt (V2) in einem Ammoniakreaktor (R) zu einem ammoniakhaltigen Syntheseprodukt (5) umgesetzt wird, von dem ein Wasserstoff und Stickstoff umfassendes Recyclegas (2) abgetrennt wird, um über eine Rückführleitung zur Bildung des Ammoniaksynthesegases (3) zurückgeführt zu werden. Kennzeichnend hierbei ist, dass der Mengenstrom des Recyclegases (2) über eine verstellbare, in der Rückführleitung (2) angeordnete Drosseleinrichtung (b) so kontrolliert wird, dass der Druck im Ammoniakreaktor (R) stets innerhalb eines vorgegebenen Wertebereichs liegt.

## Beschreibung

Die Erfindung betrifft ein Verfahren zur Synthese von Ammoniak, bei dem ein Wasserstoff und Stickstoff umfassendes Gasgemisch (Make-up-Gas) mit zeitlich schwankendem Mengenstrom zur Bildung eines Ammoniaksynthesegases bereitgestellt wird, das nach einem Verdichtungsschritt in einem Ammoniakreaktor zu einem ammoniakhaltigen Syntheseprodukt umgesetzt wird, von dem ein Wasserstoff und Stickstoff umfassendes Recyclegas abgetrennt wird, um über eine Rückführleitung zur Bildung des Ammoniaksynthesegases zurückgeführt zu werden.

Weiterhin betrifft die Erfindung eine Vorrichtung zur Durchführung des erfindungsgemäßen Verfahrens.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert. Die dabei ablaufende Synthesereaktion

N₂ + 3H₂ ↔ 2NH₃

ist exotherm und volumenvermindernd, so dass sich das Reaktionsgleichgewicht mit fallender Temperatur und steigendem Druck zur Seite des Ammoniaks verschiebt.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300bar und einer Temperatur zwischen 300 und 450°C einem Ammoniakreaktor zugeführt, wo es mit katalytischer Unterstützung unter Bildung von Ammoniak zu einem Syntheseprodukt umgesetzt wird, das neben Ammoniak auch erhebliche Wasserstoff- und Stickstoffanteile enthält. Mit einer Temperatur zwischen 400 und 470°C verlässt das Syntheseprodukt den Ammoniakreaktor und wird nachfolgend in einer Reihe von Wärmeübertragern abgekühlt, um Ammoniak auszukondensieren und in einem Abscheider von einem weitgehend aus Wasserstoff und Stickstoff bestehenden, Reste nicht auskondensierten Ammoniaks enthaltenden Recyclegas abzutrennen, das über eine Rückführleitung, die den Ammoniakreaktor und den Abscheider zu einem Synthesekreislauf verbindet, zur Erhöhung der Ammoniakausbeute zurückgeführt und dabei mit einem Wasserstoff und Stickstoff umfassenden Make-up-Gas zum Ammoniaksynthesegas gemischt wird.

Üblicherweise sind Ammoniakreaktoren als adiabate Mehrbettrektoren ausgeführt, die wenigstens zwei strömungstechnisch miteinander verbundene Katalysatorbetten umfassen, die seriell von Ammoniaksynthesegas, das dabei schrittweise zum Syntheseprodukt umgesetzt wird, durchströmt werden können. Nach dem ersten und vor jedem weiteren Katalysatorbett ist jeweils eine Kühleinrichtung angeordnet, über die Reaktionswärme aus dem durch Umsetzung im vorgeschalteten Katalysatorbett erhaltenen Gasgemisch abgeführt wird, um es abgekühlt zur weiteren Umsetzung in das nachgeschaltete Katalysatorbett weiterzuführen. Als Kühlmittel bei einer derartigen Zwischenkühlung dient anzuwärmendes nicht umgesetztes Ammoniaksynthesegas. Je nachdem, ob die Wärme dabei direkt oder indirekt auf das Ammoniaksynthesegas übertragbar ist, spricht man in Fachkreisen von Adiabatic-Quench-Cooling- oder AQC-Reaktoren bzw. Adiabatic-Indirect-Cooling- oder AIC-Reaktoren.

Der für die Bildung des Make-up-Gases benötigte Wasserstoff wird heute noch überwiegend aus Kohlenwasserstoffen gewonnen, die hierbei unter Entstehung von Kohlendioxid zu einem wasserstoffreichen Synthesegas reformiert werden. Das klimaschädliche Kohlendioxid wird abgetrennt und entweder in die Atmosphäre freigesetzt oder mit großem finanziellem und apparativem Aufwand durch Sequestrierung entsorgt.

Um diese Nachteile zu überwinden, werden in letzter Zeit verstärkt Anstrengungen unternommen, Wasserstoff kohlendioxidfrei beispielsweise durch elektrochemische Zerlegung von Wasser unter Verwendung eines Elektrolyseurs zu gewinnen und zur Bildung des Make-up-Gases einzusetzen. Die insgesamt für die Ammoniakerzeugung benötigte elektrische Energie wird dabei direkt aus regenerativen Quellen wie Wind- oder Solarkraftwerken, oder als Überschussstrom aus dem öffentlichen Netz bezogen, weshalb sie nicht mit konstanter Leistung zur Verfügung steht. Da sich der Betrieb des Elektrolyseurs und einer evtl. zur Stickstofferzeugung eingesetzten Luftzerlegungsanlage relativ einfach und schnell an sich ändernde Betriebsbedingungen anpassen lassen und die Produktionsmengen von Wasserstoff und Stickstoff in erster Näherung proportional zur eingesetzten elektrischen Leistung sind, variieren die Mengenströme des im Elektrolyseur produzierten Wasserstoffs und des in der Luftzerlegungsanlage erzeugten Stickstoffs mit der Menge der verfügbaren elektrischen Energie. Entsprechend erreichen die Mengenströme des Make-up- und des Ammoniaksynthesegases häufig und über längere Zeiträume weniger als die Hälfte der Werte, die für einen Volllastbetrieb des Ammoniakreaktors erforderlich sind.

Im Gegensatz zum Elektrolyseur und zu einer ggf. zur Stickstoffgewinnung eingesetzten Luftzerlegungsanlage, passt sich der Ammoniakreaktor und der mit ihm verbundene Synthesekreislauf nur sehr langsam und begrenzt an sich ändernde Betriebsbedingungen an. Eine Änderung der Reaktionsbedingungen eilt einer Reduzierung der zugeführten Menge an Make-up-Gas stets hinterher. Dies führt dazu, dass für einen gewissen Zeitraum weniger Make-up-Gas dem Synthesekreislauf zugeführt wird, als im Synthesereaktor umgesetzt und über den Abscheider als flüssiges Ammoniak abgeführt wird. Entsprechend der dadurch abnehmenden Stoffmenge sinkt der Druck im Synthesekreislauf. Wird der zugeführte Strom an Make-up-Gas nicht weiter verringert stellt sich ein neuer stationärer Betriebspunkt bei verringertem Druck ein. Beispielsweise kann eine Absenkung der Ammoniaksynthesegasmenge auf 1 0% des Volllastwertes eine Reduzierung des Drucks im Ammoniakreaktor um bis zu 50% zur Folge haben.

Übermäßige und häufige Druckabsenkungen führen zu einer starken mechanischen Beanspruchung des gesamten Synthesekreislaufs, was eine spezielle Auslegung der Komponenten im Synthesekreislauf für häufige Druckwechsel zur Folge hat. Diese ist insbesondere für den Ammoniakreaktor nur mit hohen zusätzlichen Investitionen durchführbar. Unterschreitet die zuführbare Menge an Ammoniaksynthesegas einen Mindestwert, der gewöhnlich bei ca. 30% des Wertes bei Volllast liegt, wird daher nach dem Stand der Technik die Produktion unterbrochen und der Ammoniakreaktor abgeschaltet.

Um das Abschalten des Ammoniakreaktors zu vermeiden, schlägt beispielsweise die Patentanmeldung WO2012/037571 A2 vor, in Stromüberschusszeiten, in denen der Elektrolyseur mehr Wasserstoff und die Luftzerlegungsanlage mehr Stickstoff produziert, als im Ammoniakreaktor verbraucht werden kann, Wasserstoff und Stickstoff in Puffertanks zu speichern und in Strommangelzeiten dazu einzusetzen, Ammoniaksynthesegas mit einem oberhalb des Mindestwertes liegenden Mengenstrom zu bilden. Um lang andauernde Strommangelzeiten überbrücken zu können, müssen die Puffertanks allerdings entsprechend groß und kostspielig ausgeführt werden.

Die vorliegende Erfindung stellt sich die Aufgabe, ein Verfahren sowie eine Vorrichtung der gattungsgemäßen Art anzugeben, durch die ein Abschalten des Ammoniakreaktors vermieden und die Ermüdung des Synthesekreislaufs durch Druckwechselbelastung gegenüber dem Stand der Technik vermindert werden kann.

Die gestellte Aufgabe wird verfahrensseitig erfindungsgemäß dadurch gelöst, dass der Mengenstrom des Recyclegases über eine verstellbare, in der Rückführleitung angeordnete Drosseleinrichtung so kontrolliert wird, dass der Druck im Ammoniakreaktor stets innerhalb eines vorgegebenen Wertebereichs liegt.

Steht weniger Make-up-Gas zur Verfügung, als für einen Volllastbetrieb des Ammoniakreaktors benötigt wird, wird der Strömungswiderstand der Rückführleitung durch Verkleinerung des Strömungsquerschnitts der Drosseleinrichtung erhöht. Hierdurch verringert sich der Durchfluss durch den Ammoniakreaktor stärker, als es allein aufgrund der reduzierten Menge an Make-up-Gas der Fall wäre. Da die Reaktionsrate, die den Anteil des eingesetzten Eduktstroms angibt, der bei einem einmaligen Durchlauf des Ammoniakreaktors zu Ammoniak umgesetzt wird, durch das druckabhängige Reaktionsgleichgewicht limitiert ist, kann sie sich nicht ausreichend erhöhen, um die reduzierte Eduktzufuhr zum Reaktor auszugleichen. Folglich wird durch die Erhöhung des Strömungswiderstandes im Synthesekreislauf die Reaktionsrate reduziert, so dass bei einer Verringerung der Anlagenlast der Druck im Synthesekreislauf weniger stark abnimmt als ohne die Nutzung der Drosseleinrichtung, bzw. konstant bleibt oder sich sogar erhöht.

Durch das erfindungsgemäße Verfahren kann eine Druckabsenkung im Ammoniakreaktor sowie anderen Teilen des Synthesekreislaufs bei einer Verminderung der Anlagenlast um bis zu 95% vermieden oder zumindest gegenüber dem Stand der Technik deutlich reduziert werden. Schwankungen der Menge des zur Verfügung stehenden Make-up-Gases haben daher keine oder nur geringe mechanische Belastungen der zur Ammoniaksynthese eingesetzten Vorrichtung zur Folge. Insbesondere der Ammoniakreaktor wird weniger stark beansprucht und kann somit kostengünstiger ausgeführt werden. Ein Abschalten des Ammoniakreaktors ist erst erforderlich, wenn die Anlagenlast auf unter oder 5% der Volllast sinkt.

Insbesondere beim Einsatz eines AIC- oder eines AQC-Reaktors kann es nach dem Stand der Technik im Teillastbetrieb zu einem Erlöschen der exothermen Synthesereaktion kommen, die bei einer übermäßigen Druckabnahme so stark gehemmt wird, dass die freiwerdende Reaktionswärme nicht mehr dazu ausreicht, den Eduktstrom vor seinem Eintritt in das erste Katalysatorbett die erforderliche Aktivierungsenergie zuzuführen.

Das erfindungsgemäße Verfahren wirkt diesem nachteiligen Effekt entgegen, da die freiwerdende Reaktionswärme bei dem gegenüber dem Stand der Technik erhöhten Druck zu einem stärkeren Temperaturanstieg im Ammoniakreaktor führt und der verringerte Durchfluss im Synthesekreislauf eine effektivere Wärmerückgewinnung in sämtlichen Zwischenkühlern des Ammoniakreaktors sowie in anderen Wärmeübertragern zur Folge hat. Darüber hinaus läuft die Synthesereaktion wegen der längeren Verweilzeit des Eduktstroms in den Katalysatorbetten des Ammoniakreaktors auch bei vergleichsweise geringen Eintrittstemperaturen nahezu bis zum Gleichgewicht ab.

Der Strömungsquerschnitt der Drosseleinrichtung kann durch das Bedienpersonal verstellt werden, das dabei darauf achtet, den Druck im Ammoniakreaktor in dem vorgegebenen Wertebereich zu halten. Eine solche Lösung ist vor allem dann sinnvoll, wenn sich der Mengenstrom des Make-up-Gases nur selten und langsam ändert.

Bevorzugt ist die verstellbare Drosseleinrichtung jedoch mit einem Stellantrieb versehen und als Stellglied in einen Regelkreis eingebunden, mit dem der Reaktordruck ohne menschlichen Eingriff automatisch in dem vorgegebenen Wertebereich gehalten wird. Zur Verbesserung der Regelbarkeit bei sehr geringen Anlagenlasten sieht eine Variante des erfindungsgemäßen Verfahrens den Einsatz eines Regelkreises vor, der dazu eingerichtet ist, eine sog. Split-Range-Regelung durchzuführen. Zweckmäßigerweise wird in dieser Variante eine Drosseleinrichtung verwendet, die wenigstens zwei parallel angeordnete, unabhängig voneinander verstellbare Drosselorgane umfasst. Mit besonderem Vorteil kann ein PID-Regelkreis eingesetzt werden, mit dem der Reaktordruck ohne bleibende Regelabweichung auf einem vorgegebenen Sollwert gehalten werden kann.

Zur Reduzierung der Druckschwankungen im Synthesekreislauf bei Verringerung der Anlagenlast kann optional auch ein erweitertes Regelungskonzept (z.B. Kaskadenregelung, Split-Range-Regelung) eingesetzt werden, für deren Ausführung der oben genannte PID-Regelkreis notwendig ist. Ebenfalls kann ein übergeordnetes Regelungskonzept (z.B. Feed-Forward-Regelung, modellprädiktive Regelung) eingesetzt werden, in welchem ein Zusammenhang zwischen der Anlagenlast, dem Durchfluss im Synthesekreislauf und dem sich im Ammoniakreaktor einstellenden Druck hinterlegt ist. Auch hier ist der oben genannte PID-Regelkreis notwendig, um ein solches Regelungskonzept auszuführen und zu nutzen.

Während des Volllastbetriebs ist die verstellbare Drosseleinrichtung mit einem hierfür festgelegten Öffnungsgrad bzw. Strömungsquerschnitt geöffnet. Ausgehend von diesem Volllastquerschnitt kann der Strömungsquerschnitt verkleinert werden, sobald der Druck im Ammoniakreaktor kleiner als der Druck bei Volllast ist. Möglich ist es aber auch, den Strömungsquerschnitt der verstellbaren Drosseleinrichtung erst dann zu verkleinern, wenn der Druck einen vorgegebenen, unterhalb des Volllastdrucks liegenden Schwellwert unterschreitet. Bei Bedarf kann der Strömungsquerschnitt durch ein weiteres Öffnen der verstellbaren Drosseleinrichtung über den Punkt des Designs hinaus vergrößert werden.

Das erfindungsgemäße Verfahren wird sinnvollerweise so durchgeführt, dass der Druck im Ammoniakreaktor einen durch entsprechende Regelwerke, wie insbesondere den Code ASME VIII/2 oder die DIN EN 13445-3 bestimmten Grenzwert nicht unterschreitet, so dass eine Druckwechselauslegung der Komponenten des Synthesekreislaufs, welche mit erhöhten Investitionskosten verbunden wäre, vermieden wird.

Weiterhin betrifft die Erfindung eine Vorrichtung Synthese von Ammoniak, mit einem Ammoniakreaktor, der mit einer Mischeinrichtung, einem Verdichter, einem Abscheider sowie einer Rückführleitung zu einem Synthesekreislauf verbunden ist, wobei der Mischeinrichtung über eine Zuführeinrichtung ein Wasserstoff und Stickstoff umfassendes Gasgemisch (Make-up-Gas) mit zeitlich schwankendem Mengenstrom zugeführt werden kann, um ein Ammoniaksynthesegas zu bilden, das über den Verdichter in den Ammoniakreaktor zur Umsetzung in ein ammoniakhaltiges Syntheseprodukt weiterleitbar ist, von dem im Abscheider ein Wasserstoff und Stickstoff umfassendes Recyclegas abgetrennt werden kann, um über die Rückführleitung der Mischeinrichtung zugeführt zu werden.

Vorrichtungsseitig wird die gestellte Aufgabe dadurch gelöst, dass die Rückführleitung eine verstellbare Drosseleinrichtung aufweist, über die der Mengenstrom des Recyclegases so kontrollierbar ist, dass der Druck im Ammoniakreaktor stets innerhalb eines vorgegebenen Wertebereichs liegt.

In einer bevorzugten Ausgestaltung ist die verstellbare Drosseleinrichtung mit einem Stellmotor ausgestattet und in einen Regelkreis eingebunden, der dazu eingerichtet ist, den Druck im Ammoniakreaktor automatisch in dem vorgegebenen Wertebereich zu halten. Der Regelkreis kann dazu eingerichtet sein, eine sog. Split-Range-Regelung durchzuführen, wodurch die Regelbarkeit des Systems im Bereich geringer Lasten verbessert wird. Zweckmäßigerweise umfasst die Drosseleinrichtung in dieser Konfiguration wenigstens zwei parallel angeordnete, unabhängig voneinander verstellbare Drosselorgane. Besonders bevorzugt ist das verstellbare Drosselorgan Teil eines PID-Regelkreises, der es ermöglicht, den Reaktordruck ohne bleibende Regelabweichung auf einem vorgegebenen Sollwert zu halten.

Die Mischeinrichtung kann im einfachsten Fall als Rohrstück ausgeführt sein, das jeweils eine Eintrittsöffnung für das Make-up- und das Recyclegas sowie eine Austrittsöffnung für das Ammoniaksynthesegas aufweist. Die Mischeinrichtung kann aber auch Teil eines zum Antrieb des Synthesekreislaufs einsetzbaren Verdichters sein, der zumindest eine Nieder- und eine seriell zu dieser angeordnete Hochdrucksektion aufweist, wobei die Mischeinrichtung zwischen Nieder- und Hochdrucksektion angeordnet ist.

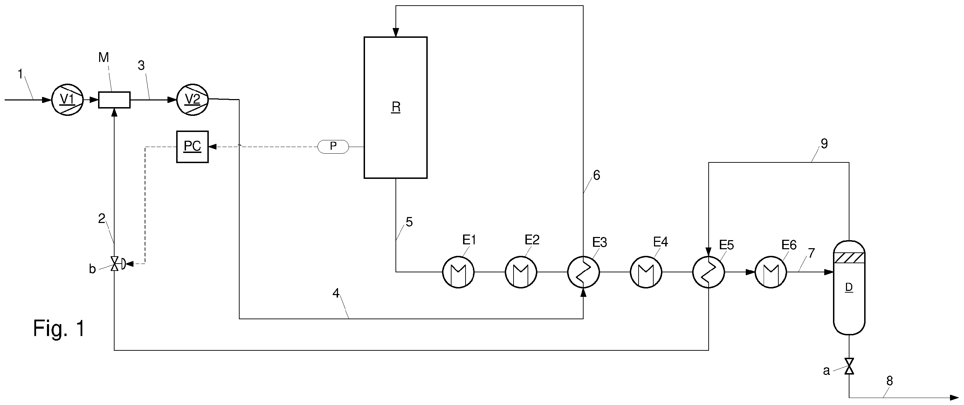

Im Folgenden soll die Erfindung anhand eines in der **Figur 1** schematisch dargestellten Ausführungsbeispiels näher erläutert werden.

Die Figur 1 zeigt eine erfindungsgemäße Ammoniaksynthese, der Make-up-Gas mit zeitlich schwankendem Mengenstrom zugeführt wird.

Der Druck des aus Wasserstoff und Stickstoff bestehenden, aus einer nicht dargestellten Quelle mit zeitlich schwankendem Mengenstrom zugeführten Make-up-Gases 1 wird im Verdichter V1 erhöht, ehe es in der Mischeinrichtung M mit dem wasserstoff- und stickstoffreichen Recyclegas 2 zum Ammoniaksynthesegas 3 zusammengeführt wird. Nach einer weiteren Druckerhöhung im Verdichter V2, der mit dem Verdichter V1 starr gekoppelt sein kann, wird das Ammoniaksynthesegas 4 im Wärmeübertrager E3 gegen das abzukühlende Syntheseprodukt 5 vorgewärmt, so dass es mit einer Temperatur zwischen 100 und 250°C, vorzugsweise zwischen 140 und 200°C als vorgewärmtes Ammoniaksynthesegas 6 zur Einleitung in den Ammoniakreaktor R bereitsteht. Im Ammoniakreaktor R wird das Ammoniaksynthesegas 6 ggf. weiter angewärmt und anschließend bei einem Druck zwischen 80 und 300bar mit katalytischer Unterstützung zu dem ammoniakhaltigen, nicht umgesetzten Wasserstoff und Stickstoff umfassenden Syntheseprodukt 5 umgesetzt, das den Ammoniakreaktor R mit einer Temperatur zwischen 400 und 470°C verlässt. In mehreren Kühlstufen E1-E6 wird das Syntheseprodukt 5 bis unter den Ammoniaktaupunkt abgekühlt, wobei ein Großteil des enthaltenen Ammoniaks auskondensiert und ein zweiphasiges Stoffgemisch 7 entsteht, das im Abscheider D in eine weitgehend aus Ammoniak bestehende Flüssigfraktion 8 sowie eine, nicht auskondensiertes Ammoniak und nicht umgesetzten Wasserstoff und Stickstoff enthaltende Gasfraktion 9 getrennt wird. Während die Flüssigfraktion 8 über das Drosselorgan a als Ammoniakprodukt abgezogen wird, wird die Gasfraktion 9 im Wärmeübertrager E5 gegen das abzukühlende Syntheseprodukt 5 angewärmt und über die Drosseleinrichtung b als Recyclegas 2 zur Mischeinrichtung M zurückgeführt.

Steht das Make-up-Gas 1 mit einem Mengenstrom zur Verfügung, der nicht dazu ausreicht, den Ammoniakreaktor R in Volllast betreiben zu können, wird dem Synthesekreislauf für einen gewissen Zeitraum weniger Make-up-Gas 1 zugeführt als im Ammoniakreaktor R umgesetzt und über den Abscheider D als flüssiges Ammoniak abgeführt wird, wodurch der Druck im Ammoniakreaktor R abfällt. Um dem Druckabfall entgegenzuwirken, wird der durch den Drucksensor P gemessene Reaktordruck mir einem im Regler PC hinterlegten Sollwert verglichen, woraus sich ein Stellsignal ergibt, das der Regler PC an die mit einem Stellantrieb ausgestatte Drosseleinrichtung b übermittelt, um deren Strömungsquerschnitt zu verkleinern und so den Durchfluss durch den Ammoniakreaktor stärker zu verringern, als es alleine aufgrund der reduzierten Menge an Make-up-Gas 1 der Fall wäre.

Da die Reaktionsrate, die den Anteil des eingesetzten Ammoniaksynthesegases 4 angibt, der bei einem einmaligen Durchlauf des Ammoniakreaktors zu Ammoniak umgesetzt wird, durch das druckabhängige Reaktionsgleichgewicht limitiert ist, kann sie sich nicht ausreichend erhöhen, um die reduzierte Menge an Ammoniaksynthesegas 4 auszugleichen. Folglich wird die Reaktionsrate herabgesetzt, so dass bei einer Verringerung der Anlagenlast der Druck im Synthesekreislauf weniger stark abnimmt als ohne die Nutzung der Drosseleinrichtung, bzw. konstant bleibt oder sich sogar erhöht.

## Patentansprüche

1. Verfahren zur Synthese von Ammoniak (8), bei dem ein Wasserstoff und Stickstoff umfassendes Gasgemisch (1) mit zeitlich schwankendem Mengenstrom zur Bildung eines Ammoniaksynthesegases (3) bereitgestellt wird, das nach einem Verdichtungsschritt (V2) in einem Ammoniakreaktor (R) zu einem ammoniakhaltigen Syntheseprodukt (5) umgesetzt wird, von dem ein Wasserstoff und Stickstoff umfassendes Recyclegas (2) abgetrennt wird, um über eine Rückführleitung zur Bildung des Ammoniaksynthesegases (3) zurückgeführt zu werden, **dadurch gekennzeichnet, dass** der Mengenstrom des Recyclegases (2) über eine verstellbare, in der Rückführleitung (2) angeordnete Drosseleinrichtung (b) so kontrolliert wird, dass der Druck im Ammoniakreaktor (R) stets innerhalb eines vorgegebenen Wertebereichs liegt.

2. Verfahren nach Anspruch 1, **dadurch gekennzeichnet, dass** der Druck im Ammoniakreaktor (R) über einen Regelkreis kontrolliert wird, in den die verstellbare Drosseleinrichtung (b) als Stellglied eingebunden ist.

3. Verfahren nach Anspruch 2, **dadurch gekennzeichnet, dass** der Druck im Ammoniakreaktor (R) mit einem PID-Regelkreis kontrolliert wird.

4. Verfahren nach einem der Ansprüche 2 oder 3, **dadurch gekennzeichnet, dass** der Druck im Ammoniakreaktor (R) über eine Split-Range-Regelung kontrolliert wird

5. Verfahren nach einem der Ansprüche 1 bis 4, **dadurch gekennzeichnet, dass** die verstellbare Drosseleinrichtung (b) mit einem für den Volllastbetrieb festgelegten Strömungsquerschnitt betrieben wird, solange der Druck im Ammoniakreaktor (R) einen vorgegebenen Schwellwert nicht unterschreitet.

6. Vorrichtung zur Synthese von Ammoniak (8), mit einem Ammoniakreaktor (R), der mit einer Mischeinrichtung (M), einem Verdichter (V2), einem Abscheider (D) sowie einer Rückführleitung (2) zu einem Synthesekreislauf verbunden ist, wobei der Mischeinrichtung (M) über eine Zuführeinrichtung (1) ein Wasserstoff und Stickstoff umfassendes Gasgemisch (Make-up-Gas) mit zeitlich schwankendem Mengenstrom zugeführt werden kann, um ein Ammoniaksynthesegas (3) zu bilden, das über den Verdichter (V2) in den Ammoniakreaktor (R) zur Umsetzung in ein ammoniakhaltiges Syntheseprodukt (5) weiterleitbar ist, von dem im Abscheider (D) ein Wasserstoff und Stickstoff umfassendes Recyclegas abgetrennt werden kann, um über die Rückführleitung (2) der Mischeinrichtung (M) zugeführt zu werden, **dadurch gekennzeichnet, dass** die Rückführleitung (2) eine verstellbare Drosseleinrichtung (b) aufweist, über die der Mengenstrom des Recyclegases so kontrollierbar ist, dass der Druck im Ammoniakreaktor (R) stets innerhalb eines vorgegebenen Wertebereichs liegt.

7. Vorrichtung nach Anspruch 6, **dadurch gekennzeichnet, dass** die verstellbare Drosseleinrichtung (b) mit einem Stellantrieb versehen und als Stellglied in einen Regelkreis eingebunden ist.

8. Vorrichtung nach Anspruch 7, **dadurch gekennzeichnet, dass** der Regelkreis ein PID-Regelkreis ist.

9. Vorrichtung nach einem der Ansprüche 7 oder 8, **dadurch gekennzeichnet, dass** der Regelkreis zur Durchführung einer Split-Range-Regelung eingerichtet ist.

10. Vorrichtung nach einem der Ansprüche 6 bis 9, **dadurch gekennzeichnet, dass** die verstellbare Drosseleinrichtung (b) wenigstens zwei parallel angeordnete, unabhängig voneinander verstellbare Drosselorgane umfasst.
